# DEMANDE DE BREVET EUROPEEN

(11) **EP 3 018 018 A1**
(43) Date de publication de la demande: **11.05.2016**
(21) Numéro de dépôt: 15191139.3
(22) Date de dépôt: 23.10.2015
(51) Int. Cl.: B60S 1/38, B60S 1/52

(54) **BALAI D'ESSUYAGE DE VITRE DE VÉHICULE AUTOMOBILE**

(30) Priorité: 07.11.2014 FR 1460760
(71) Demandeur: Valeo Systèmes d'Essuyage, 78321 Le Mesnil Saint Denis (FR)
(72) Inventeur: THEBAULT, Denis, 63000 Clermont Ferrand (FR); BARRET, Guillaume, 63270 LAPS (FR)
(74) Mandataire: Callu Danseux, Violaine

(57) **Abrégé**

Un balai d'essuyage comporte une monture de support (2) d'une lame d'essuyage (4) apte à être au contact de la vitre à essuyer, la monture de support présentant des gorges longitudinales (16) disposées transversalement de part et d'autre de la monture de support pour le logement de deux éléments de rigidification (18).

La monture de support est recouverte par un élément de capotage (6) en prise avec les extrémités des éléments de rigidification dépassant en saillie de la monture de support.

L'élément de capotage comportant une cavité (8) qui s'étend longitudinalement dans le volume de l'élément de montage pour former une conduite de circulation d'un liquide à projeter sur la vitre.

L'invention trouve particulièrement application dans le nettoyage des vitres de véhicules automobile.

## Description

L'invention a trait au domaine de l'essuyage des vitres, notamment pour des véhicules automobiles, et elle concerne plus particulièrement la structure des balais d'essuyage.

Certains balais d'essuyage comportent de façon connue des éléments de rigidification qui s'étendent longitudinalement le long du balai dans des cavités prévus à cet effet. Ces éléments de rigidification visent à assurer la tenue structurelle du balai, aussi bien pour la prise par un bras d'essuie-glace associé par l'intermédiaire d'un connecteur, que pour la tenue à l'effort du balai lors du balayage de la vitre. On connaît des structures de balai comportant une pièce longitudinale monobloc formant un support en matériau plastique semi-rigide et flexible comportant latéralement deux gorges formant cavités de réception de tiges de rigidification, généralement métallique, appelée également vertèbres. Ces vertèbres sont ainsi disposées le long du balai de chaque côté de celui-ci, en dépassant de l'épaisseur du support pour permettre une prise avec au moins un connecteur permettant la liaison avec le mécanisme d'entraînement du balai.

Par ailleurs, les équipementiers visent de nos jours à intégrer des fonctions sur les balais d'essuyage et notamment des buses d'éjection de liquide de nettoyage pour remplacer les buses fixes disposées classiquement en partie inférieure du pare-brise. On connaît des balais munis de conduits externes rapportés latéralement sur la structure du balai et percés de trous d'éjection, les conduits étant solidaires du déplacement en va-et-vient du balai.

La présente invention vise, dans ce contexte industriel, à proposer une alternative aux balais d'essuyage existants. Elle concerne un balai d'essuyage de vitres, notamment pour des vitres de véhicules automobiles, du type comportant une monture de support d'une lame d'essuyage apte à être au contact de la vitre à essuyer, la monture de support présentant des gorges longitudinales disposées transversalement de part et d'autre de la monture de support pour le logement de deux éléments de rigidification. Selon l'invention, la monture de support est recouverte par un élément de capotage en prise avec les extrémités des éléments de rigidification dépassant en saillie de la monture de support, ledit élément de capotage comportant une cavité qui s'étend longitudinalement dans le volume de l'élément de montage pour former une conduite de circulation d'un liquide à projeter sur la vitre. Et l'élément de capotage comporte une partie supérieure de conduite de circulation d'eau et une partie inférieure de maintien sur la monture de support, ladite partie supérieure et ladite partie inférieure étant séparées par une paroi centrale apte à être placée en regard d'une face supérieure de la monture de support.

Selon une caractéristique avantageuse de l'invention, la largeur de la cavité est sensiblement égale à la largeur de la monture de support.

On peut prévoir d'une part que la partie supérieure de l'élément de capotage comporte une paroi supérieure et ladite paroi centrale, sensiblement parallèles, ainsi que deux parois latérales reliant les parois supérieure et centrale entre elles à leurs extrémités correspondantes, la cavité formant conduite de circulation de liquide étant délimitée par ces parois.

Et on peut prévoir en outre que la partie inférieure de l'élément de capotage comporte deux pattes prolongeant dans la direction verticale, vers la lame d'essuyage, les parois latérales de la partie supérieure, chaque patte portant sur une face interne une gorge de réception d'une extrémité de l'un des éléments de rigidification dépassant en saillie de la monture de support.

Avantageusement, dans ce cas, chaque patte peut présenter une face inférieure, à l'opposé de la partie supérieure de la monture de support, qui s'étend sensiblement dans le plan d'une face inférieure de la monture de support.

Selon des caractéristiques de l'invention,
- la cavité comporte au moins un trou d'évacuation, formé dans l'une des parois latérales, pour la projection de liquide vers la vitre à essuyer ; le(s) trou(s) d'évacuation présente(nt) une inclinaison, depuis l'intérieur de la cavité vers l'extérieur du balai, vers la vitre à essuyer ;
- le balai présente une forme symétrique par rapport à un plan de symétrie longitudinal et vertical, formant un plan vertical médian ; l'élément de capotage, la cavité de l'élément de capotage, la monture de support et la lame d'essuyage sont chacun centrés sur le plan vertical médian du balai ;
- la lame d'essuyage comporte une lèvre d'essuyage en caoutchouc venue de matière avec la face inférieure de la monture de support et dont l'extrémité libre est apte à être en contact avec la vitre à essuyer.

L'invention concerne également un dispositif d'essuyage dans lequel un bras d'essuie-glace entraîné en rotation par des moyens motorisés porte par l'intermédiaire d'un connecteur un balai d'essuyage tel que décrit précédemment.

D'autres caractéristiques et avantages de la présente invention apparaitront plus clairement à l'aide de la description et des dessins parmi lesquels :
- la figure 1 est une vue en perspective d'un balai d'essuyage sur lequel est rapporté en son centre un connecteur apte à assurer la liaison entre ledit balai et un bras d'essuie-glace non représenté ;
- et les figures 2 et 3 sont des vues respectivement de face et en perspective, d'une coupe du balai d'essuyage selon l'invention.

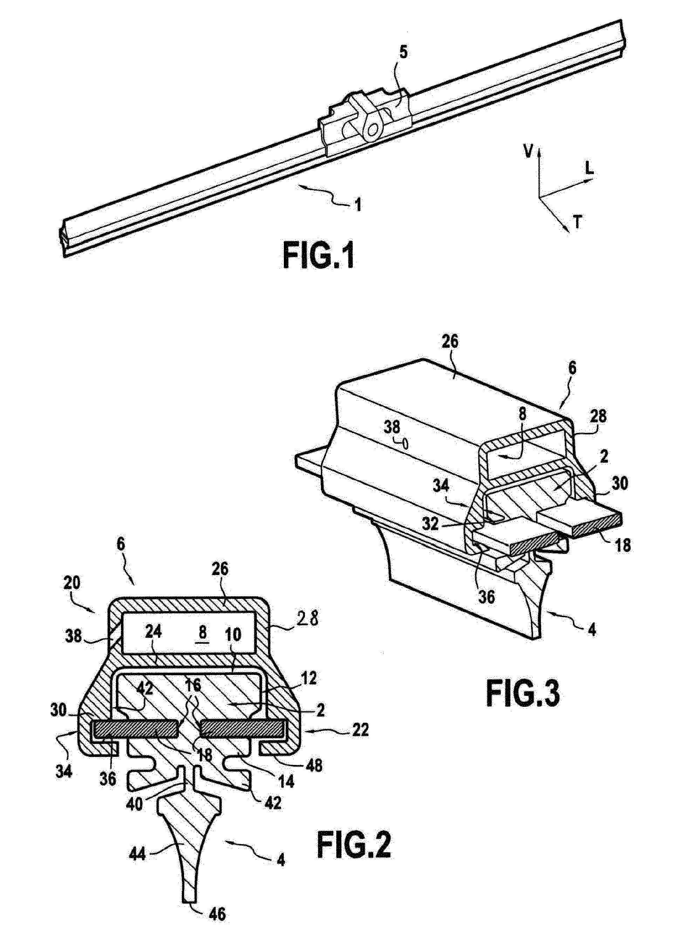

Dans la description qui va suivre et dans les revendications, on se référera, à titre non limitatif, à l'orientation du trièdre L, V, T indiqué sur la figure 1 et qui correspond aux directions Longitudinale (direction principale du balai d'essuie-glace), Verticale et Transversale (étant entendu d'une part que dans la représentation faite, la direction Transversale correspond aussi à la référence horizontale, le balai étant illustré en position d'angle d'attaque nul, c'est-à-dire que la lame d'essuyage est en position de repos, non contrainte contre la vitre à essuyer, et étant entendu d'autre part que lorsque le balai est amené contre la vitre à essuyer, les directions Verticale et Transversale sont inclinées d'un angle correspondant à l'angle du pare-brise).

Un balai d'essuyage 1 selon l'invention comporte notamment une monture de support 2 d'orientation principale longitudinale, apte à maintenir en position une lame d'essuyage 4, venue de matière avec la monture de support et dont une extrémité libre, à l'opposé de la monture de support est apte à être plaquée contre la vitre à essuyer.

Tel qu'illustré sur la figure 1, un tel type de balai est amené à être monté sur un bras d'essuie-glace (ici non représenté) par l'intermédiaire d'un connecteur 5 qui vient en prise sur le balai au niveau de la portion d'accroche de la lame sur la monture de support. On comprend que d'autres types de connecteurs que le connecteur central représenté pourraient être utilisés avec le balai selon l'invention.

Selon l'invention, le balai d'essuyage comporte en outre un élément de capotage 6 qui vient en recouvrement de la monture de support et qui porte dans son épaisseur une cavité longitudinale 8 formant conduite de circulation de liquide de nettoyage, de sorte que cette conduite de circulation s'étend au-dessus de la monture de support 2.

On décrit maintenant un mode de mise en oeuvre préféré de l'invention, en se référant notamment aux illustrations des figures 2 et 3.

La monture de support présente un profil plein avec une face supérieure 10, des faces latérales 12 que l'élément de capotage 6 est apte à recouvrir, ainsi qu'une face inférieure 14 tournée vers la lèvre d'essuyage.

Des gorges 16 sont réalisées longitudinalement, au moins partiellement le long de la monture, chacune de ces gorges étant creusées dans la direction transversale depuis une latérale de la monture de support, et elles présentent des dimensions de profondeur et de hauteur adaptées à permettre la réception d'un élément de rigidification 18.

Chaque élément de rigidification 18 consiste en une lame métallique souple, de section rectangulaire, de type vertèbre plane flexible. Il confère au balai son élasticité dans le plan vertical et longitudinal lui permettant de s'adapter à la conformation, et notamment au galbe, de la face externe de la vitre à essuyer contre laquelle le balai est en appui.

L'élément de capotage 6 est rapporté sur cette monture de support 2. L'élément de capotage présente une partie supérieure 20 et une partie inférieure 22 séparée par une paroi centrale 24 qui s'étend sensiblement droite dans la direction longitudinale. Lorsque l'élément de capotage est en position sur la monture de support, la paroi centrale est disposée en regard de la face supérieure 10 de la monture de support 2.

La partie supérieure 20 de l'élément de capotage 6 comporte une paroi supérieure 26 sensiblement parallèle à la paroi centrale 24, ces deux parois étant reliées à leurs extrémités correspondantes par des parois latérales 28 sensiblement droites dans la direction verticale, de manière à ce qu'une cavité longitudinale 8 de section rectangulaire soit formée dans cette partie supérieure 20.

La partie inférieure 22 de l'élément de capotage comporte des pattes longitudinales 30 qui prolongent verticalement les parois latérales 28, les pattes étant plus épaisses que les parois latérales de sorte qu'une face interne 32 est disposée en regard de la monture de support et qu'une face externe 34 présente un plan incliné allant dans le sens de l'élargissement transversal. Ces pattes comportent chacune une gorge 36 réalisée longitudinalement dans la face interne 32 et présentant une dimension adaptée pour recevoir avec jeu l'extrémité libre d'une vertèbre de rigidification. La coopération des vertèbres dans les gorges assurent le positionnement vertical et transversal de l'élément de capotage 6 par rapport à la monture de support 2, et donc, tel que cela est visible sur les figures 2 et 3, l'alignement transversal de la cavité 8 de la partie supérieure sur le support de monture et la lèvre d'essuyage.

La cavité 8 est réalisée longitudinalement, au moins partiellement le long de la monture, entre la paroi supérieure, les parois latérales et la paroi centrale, et elle forme une conduite de circulation de liquide entre un moyen d'arrivée de liquide ici non représenté et au moins un trou d'évacuation 38 de ce liquide formé dans une des parois latérales de ladite cavité. On comprend que le fait d'embarquer un dispositif de projection de liquide sur le balai est particulièrement intéressant notamment lorsque plusieurs trous d'évacuation sont prévus en série le long du balai, et ce même si un seul est représenté sur les figures. Par ailleurs, il pourra être prévu de disposer des trous d'évacuation d'un côté ou de l'autre de la deuxième cavité, pour pouvoir projeter du liquide en amont de la lame d'essuyage quel que soit son sens de déplacement.

Chaque trou d'évacuation de liquide 38 formé dans l'une des parois latérales 28 est incliné par rapport à la direction transversale, de manière à ce que le liquide qui sorte de la cavité 8 vers la vitre soit projeté vers le bas, l'extrémité du trou débouchant dans la cavité étant plus haute que l'extrémité du trou débouchant à l'extérieur du balai. L'inclinaison est calculée pour que le liquide soit correctement projeté en amont du balai lorsque celui-ci est en mouvement. La largeur de la cavité 8 est sensiblement égale à la largeur de la monture de support 2. On peut noter que si les pattes 30 forment une surépaisseur par rapport aux parois latérales 28 qu'elles prolongent au-delà de la paroi centrale, elles présentent un plan incliné qui permet de réaliser les trous d'évacuation de liquide 38 dans la paroi latérale au niveau de la cavité avec un angle de perçage incliné suffisamment pour la direction de projection de liquide en sortie des trous soit correcte. On comprend qu'il s'agit ici d'éviter que l'angle de perçage par rapport à la direction verticale soit trop important pour éviter que la distance de projection, c'est-à-dire la distance sur la vitre entre la zone d'impact du liquide et la lame d'essuyage, soit trop importante et nuise à la qualité d'essuyage de la vitre.

Dans le mode de réalisation illustré, la lame d'essuyage 4 et la monture de de support 2 sont venus de matière. On comprendra qu'il pourrait en être autrement sans sortir du contexte de l'invention, la monture de support pouvant être prolongé verticalement au-delà des gorges portant les éléments de rigidification par des portions de nervures formant par un rapprochement l'une vers l'autre de leurs extrémités libres un rail de maintien dans lequel un talon de la lame d'essuyage est enfilé, de manière à ce que, lorsque la lame d'essuyage doit être changée, on ne soit pas obligé de changer l'intégralité du balai mais uniquement la lame d'essuyage que l'on retire du rail de maintien par coulissement.

La lame d'essuyage 4 est réalisée en caoutchouc ou en matériau élastomère naturel ou synthétique, par extrusion, par injection ou par moulage. Elle est principalement composée d'une partie de connexion à la monture de support, comportant une âme verticale 40 et des languettes 42 qui s'étendent en saillie transversale de cet âme, et d'une lèvre 44 disposée en bout de la partie de connexion et qui présente une extrémité libre 46 apte à entrer en contact avec la surface, ici une vitre de véhicule automobile, à nettoyer, l'âme reliant la monture de support et la lèvre constituant une partie intermédiaire de moindre section pour former charnière.

Le dégagement créé entre la face inférieure 14 de la monture de support et les languettes 42 de la lame d'essuyage permet d'offrir une prise, sous les éléments de rigidification 18, au connecteur 5 tel qu'il a été illustré à titre d'exemple sur la figure 1, la prise par le connecteur étant favorisée par l'extension transversale de la partie inférieure 22 de l'élément de capotage. On observe qu'avantageusement selon l'invention, la face inférieure 48 des pattes 30 de l'élément de capotage s'étendent sensiblement dans le même plan que la face inférieure 14 de la monture de support, de sorte que les pattes offrent un prolongement transversal à la prise du balai par le connecteur central.

La monture de support 2 présente une symétrie générale de conception par rapport au plan vertical médian PVM qui est aussi le plan de symétrie de la lame d'essuyage et de l'élément de capotage. Les termes de largeur, respectivement de hauteur, du corps correspondent aux distances séparant les deux parois latérales, respectivement les parois supérieure et inférieure.

Le balai d'essuyage peut comporter également un déflecteur ou spoiler aérodynamique supérieur, ici non représenté, dont la forme et la réalisation en matériau synthétique rigide ou souple permettent d'optimiser les performances aérodynamiques du balai. On saura prévoir facilement des moyens de fixation du déflecteur sur la face externe de la paroi supérieure de l'élément de capotage du balai, de sorte que la présence de l'élément de capotage entre le déflecteur et la monture de support permet de faciliter le montage du déflecteur.

Il a été précisé dans la description que l'élément de capotage et la cavité associée s'étendent longitudinalement dans l'axe du balai, et l'on peut comprendre par-là que la conduite de canalisation de liquide s'étend de manière continue d'une extrémité longitudinale du balai à l'autre. Toutefois, on pourra imaginer, sans sortir du contexte de l'invention, que la conduite de canalisation de liquide peut s'étendre sur une portion limitée du balai, en fonction par exemple de l'endroit où est situé le tuyau d'arrivée de liquide de nettoyage, et que cette limitation de l'étendue de la conduite peut être réalisée par une cavité qui ne s'étend pas sur toute la longueur de l'élément de capotage, ou par un élément de capotage qui ne s'étend pas sur toute la longueur du balai.

La description qui précède explique clairement comment l'invention permet d'atteindre les objectifs qu'elle s'est fixés, notamment par l'utilisation d'un élément de capotage qui est rapporté sur une monture de support par coopération avec les vertèbres de rigidification et qui forme une conduite de circulation de liquide.

Bien entendu, diverses modifications peuvent être apportées par l'homme du métier aux structures du balai d'essuyage, dès lors que l'on propose de réaliser une cavité dans un élément de capotage s'étendant longitudinalement au moins partiellement le long d'une monture de support. Les modes de réalisation qui ont été décrits en détails ci-dessus ne sont pas limitatifs de l'invention. En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Balai d'essuyage de vitres, notamment pour des vitres de véhicules automobiles, du type comportant une monture de support (2) d'une lame d'essuyage (4) apte à être au contact de la vitre à essuyer, la monture de support présentant des gorges longitudinales (16) disposées transversalement de part et d'autre de la monture de support pour le logement de deux éléments de rigidification (18),
**caractérisé en ce que** la monture de support est recouverte par un élément de capotage (6) en prise avec les extrémités des éléments de rigidification dépassant en saillie de la monture de support, ledit élément de capotage comportant une cavité (8) qui s'étend longitudinalement pour former une conduite de circulation d'un liquide à projeter sur la vitre, l'élément de capotage (6) comportant une partie supérieure (20) de conduite de circulation d'eau et une partie inférieure (22) de maintien sur la monture de support (2), ladite partie supérieure et ladite partie inférieure étant séparées par une paroi centrale (24) apte à être placée en regard d'une face supérieure (10) de la monture de support.

2. Balai d'essuyage selon la revendication 2, **caractérisé en ce que** la largeur de la cavité (8) est sensiblement égale à la largeur de la monture de support (2).

3. Balai d'essuyage selon l'une des revendications 1 ou 2, **caractérisé en ce que** la partie supérieure (20) de l'élément de capotage comporte une paroi supérieure (26) et ladite paroi centrale (24), sensiblement parallèles, ainsi que deux parois latérales (28) reliant les parois supérieure et centrale entre elles à leurs extrémités correspondantes, la cavité (8) formant conduite de circulation de liquide étant délimitée par ces parois.

4. Balai d'essuyage selon la revendication 3, **caractérisé en ce que** la partie inférieure (22) de l'élément de capotage comporte deux pattes (30) prolongeant dans la direction verticale, vers la lame d'essuyage (4), les parois latérales (28) de la partie supérieure, chaque patte portant sur une face interne (32) une gorge de réception (36) d'une extrémité de l'un des éléments de rigidification dépassant en saillie de la monture de support (2).

5. Balai d'essuyage selon la revendication 4, **caractérisé en ce que** chaque patte (30) présente une face inférieure (48), à l'opposé de la partie supérieure (20) de la monture de support (2), qui s'étend sensiblement dans le plan d'une face inférieure (14) de la monture de support (4).

6. Balai d'essuyage selon l'une des revendications 3 à 5, **caractérisé en ce que** ladite cavité (8) comporte au moins un trou d'évacuation (38), formé dans l'une des parois latérales (28), pour la projection de liquide vers la vitre à essuyer.

7. Balai d'essuyage selon la revendication précédente, **caractérisé en ce que** le au moins un trou d'évacuation (38) présente une inclinaison, depuis l'intérieur de la cavité (8) vers l'extérieur du balai, vers la vitre à essuyer.

8. Balai d'essuyage selon l'une des revendications précédentes, **caractérisé en ce qu'**il présente une forme symétrique par rapport à un plan de symétrie longitudinal et vertical, formant un plan vertical médian, et **caractérisé en ce que** l'élément de capotage (6), la cavité (8) de l'élément de capotage, la monture de support (2) et la lame d'essuyage (4) sont chacun centrés sur le plan vertical médian du balai.

9. Balai d'essuyage selon l'une des revendications précédentes, **caractérisé en ce que** la lame d'essuyage (4) comporte une lèvre d'essuyage (44) en caoutchouc venue de matière avec la face inférieure (14) de la monture de support (2) et dont l'extrémité libre est apte à être en contact avec la vitre à essuyer.

10. Dispositif d'essuyage dans lequel un bras d'essuie-glace entraîné en rotation par des moyens motorisés porte, par l'intermédiaire d'un connecteur (5), un balai d'essuyage selon l'une des revendications 1 à 9.
